# EUROPEAN PATENT APPLICATION

(11) **EP 1 616 887 A1**
(43) Date of publication of application: **18.01.2006**
(21) Application number: 04103345.7
(22) Date of filing: 13.07.2004
(51) Int. Cl.: C08F 10/00, C08F 4/642, C08L 23/08

(54) **Extrusion coating process of polyethylene**

(71) Applicant: TOTAL PETROCHEMICALS RESEARCH FELUY, 7181 Seneffe (Feluy) (BE)
(72) Inventor: Dupuy, Carole, B-1000, Bruxelles (BE)

(57) **Abstract**

The invention discloses an extrusion coating process of a polyethylene resin on a substrate characterised in that the polyethylene resin is prepared in the presence of an activated bridged bis (tetrahydro-indenyl) metallocene catalyst. The resin may be used alone or in combination with LDPE. The invention also covers the coating obtainable by the process.

## Description

The present invention relates to a process for the extrusion coating of polyethylene on a substrate, to the coatings issued from said process and their uses.

The extrusion coating process is a well-known process in which a polyolefin is melted and extruded on a substrate such as for example paper, cardboard, aluminium foil, and polymer film.

From an economical point of view, it is highly desired to run extrusion coating lines at the highest possible speed and to provide coatings as thin as possible, the latter generally being obtained by increasing the speed, all other conditions being equal.

Among the polyolefin resins currently used in the extrusion coating process, one can cite low density polyethylene resins manufactured by using a high pressure free radical polymerization process (LDPE) as well as Ziegler-Natta catalysed linear low density polyethylene resins (LLDPE) and conventional high density polyethylene resins (HDPE). Nevertheless, all these resins suffer from several drawbacks. The LDPE has a poor drawability leading to thick coatings. The LLDPE exhibit relatively a poor extrusion processability. The HDPE suffer from extrusion instability such as draw resonance and exhibit neck-in problems. Draw resonance and neck-in are known to those skilled in the art of extrusion process. In the phenomenon of draw resonance, oscillations occur during the drawing down of the molten web leading to variable thickness of the coating whereas the neck-in refers to the reduction of the molten web width, as it is draw down.

To improve the drawbacks of the LLDPE and the HDPE in the extrusion coating process, low density polyethylene is often used in blend with those resins.

Nevertheless, the extrusion coating process of these blends can still be improved.

US 5,674,342 discloses a process and a thermoplastic composition for extrusion coatings with at least one ethylene polymer having a Dow Rheology index (DRI) of at least 0.1 or, alternately, at least one substantially linear ethylene polymer used alone or in combination with at least one high-pressure ethylene polymer and/or with at least one heterogeneous linear olefin polymer. Nevertheless, when high extrusion coating lines speed is required, the extrusion coating process of these polyethylene resins can still be improved.

The present inventor has found that by using a specific metallocene catalysed polyethylene resin in the extrusion coating process, said process is improved.

It is an object of the present invention to provide a new process for the extrusion coating of a polyethylene resin or a polyethylene blend on a substrate.

In the present invention, the extrusion coating process is evaluated by using the following parameters:
1. The highest extrusion coating line speed without causing breaks in the molten web coating the substrate and when the molten web does not break, the highest extrusion coating line speed without causing extrusion instabilities of the molten web,
2. The coating weight per surface unit of the substrate at the break of the molten web,
3. The percentage of the neck-in of the molten web at a given line speed, as well as at the apparition of the extrusion instabilities of the molten web and at the break of the molten web. The neck-in is determined by measuring the difference between the width of the die and the width of the molten web to be coated.
4. The output and the extrusion pressure at a given line speed.

The present inventor has found a process for the extrusion coating of a polyethylene resin on a substrate characterised in that the polyethylene resin is produced in the presence of an activated metallocene catalyst (mPE), the metallocene catalyst having the general formula:

R (Ind)₂ MQ_{Z-2}

Wherein
Ind is a tetra hydrogenated indenyl group;
R is a substituted or unsubstituted C₁-C₄ alkylidene radical, a dialkyl germanium or a dialkyl silicon or a di-aloxysilane, or an alkyl phosphine or amine radical bridging two tetra hydrogenated indenyl group;
Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other,
Z is the valence of the transition metal and
M is a group IVb, Vb or VIb transition metal,

Preferably, M is a group IVb transition metal, more preferably M is zirconium.

Preferably, Q is an alkyl having from 1-4 carbon atoms or an alkyl having 6 carbon atoms or a halogen, more preferably Q is methyl or chlorine.

Preferably, R is a substituted or unsubstituted C₁-C₄ alkylidene radical, more preferably ethylene or isopropylidene.

Preferably, the metallocene catalyst used in the invention is a bridged bis (tetrahydro-indenyl) zirconium dichloride, more preferably an ethylene bis (tetrahydro-indenyl) zirconium dichloride.

The metallocene catalyst is activated and may be supported according to any method known.

The metallocene catalyst can be used in any polymerization process such as for example gas, solution or slurry. Preferably, slurry polymerization is used.

Preferably, the mPE is a copolymer of ethylene with a comonomer selected from the group consisting of propylene, 1-butene, 1-hexene, 1-octene and 4-methyl-1-pentene, the preferred comonomer being 1-hexene.

In this invention, the density of the mPE usually ranges from 0.924g/cm³ to 0.960g/cm³ and is measured at 23°C using the method ASTM D 1505.

The melt index of the mPE measured according to the method ASTM D 1238 condition 190°C/2.16 kg (MI2) can be regulated by the amount of hydrogen injected in the reactor. The melt index of the mPE usually ranges from 4g/10 min to 20g/10 min.

The mPE may be used pure or in blends with LDPE (mPE/LDPE). Preferably, the mPE is used in blend with LDPE. By adding LDPE to the mPE resin, it is possible to further enhance the process for extrusion coating the mPE resin.

The manufacture of the LDPE used in the invention is known in the art and is described for example in "Encyclopedia of Polymer Science and Engineering", second edition, Volume 6, on pages 404 to 407.

According to embodiments of the invention, compositions of LDPE and mPE are obtained by preliminary dry blend.

The mPE resin or the mPE/LDPE blend is further extruded and coated on a substrate such as, but not limited to, paper, cardboard, polymer film, aluminium foil. The coating on the aluminium foil is made possible by means of a bonding layer of an adhesive polymer.

According to one embodiment, the coated substrate may be paper suitable for photography. For this application, the mPE that has to be coated on the paper has preferably a density from 0.940 g/cm³ to 0.960 g/cm³.

According to another embodiment, the coated substrate may be cardboard or aluminium foil suitable for liquid packaging. For this application, the mPE has a density from 0.910 g/cm³ to 0.960 g/cm³, preferably from 0.924 g/cm³ to 0.945 g/cm³.

Still according to another embodiment, the coated substrate may be thermoplastic films suitable for food packaging. For this application, the mPE has a density from 0.910 g/cm³ to 0.960 g/cm³, preferably from 0.924 g/cm³ to 0.960 g/cm³.

Still according to a further embodiment, the coated substrate may be cardboard suitable for pet food packaging and washing powder packaging. Aluminium foil may also be used as coated substrate for pet food packaging. For these applications, the mPE has a density from 0.910 g/cm³ to 0.960 g/cm³, preferably from 0.924 g/cm³ to 0.960 g/cm³.

The invention further provides the coating obtainable according to the process of the invention. This coating is characterised by excellent optical properties, good sealing and mechanical properties, good water barrier performances and a good resistance to fatty substances and to acid substances.

The coating of the invention can be used in numerous applications such as for example:
- Liquid packaging because of the thin thickness of the coating while keeping good sealing properties and a good resistance even for fatty and acid substances,
- Photographic paper because of the rigidity of the coating,
- Pet food packaging because of the good resistance of the coating to fatty substances,
- Food packaging because of the mechanical properties of the coating and the adhesion of the coating on polypropylene,
- Washing powder packaging because of the water barrier property of the coating.

### EXAMPLES:

### 1. Polymerization procedure.

The polymerization of the mPE resins R1 and R2 used in the extrusion coating process of the present invention was carried out in a liquid-full slurry loop reactor. Ethylene was injected with 1-hexene together with the catalyst. The metallocene catalyst used was an activated supported ethylene bis (tetrahydro-indenyl) zirconium dichloride. Isobutane was used as diluent. The polymerization conditions are indicated in Table 1.

**TABLE I**

| | Resin R1 | Resin R2 |
|---|---|---|
| C2 feed (Ton/h) | 5 | 3 |
| C6/C2 feed ratio (kg/Ton) | 0.8 | 40 |
| H2/C2 feed ratio (g/Ton) | 93 | 72 |
| Iso C4 feed (Ton/h) | 2.6 | 1.92 |
| TIBAL conc. (ppm) | 200 | 200 |
| Temperature of polymerization (°C) | 95 | 90 |

| | | |
|---|---|---|
| C2 = ethylene | | |
| C6 = 1-hexene | | |
| Iso C4 = isobutane | | |
| TIBAL = triisobutylaluminium | | |

The data concerning resins R1 and R2 are summarized in Table II.

**TABLE II**

| | R1 | R2 |
|---|---|---|
| Density g/cm³ | 0.960 | 0.934 |
| MI2 g/10 min | 8 | 8 |

### 2. Blends preparation.

Several blends and comparative blends have been prepared by using the following resins:
A commercial Ziegler-Natta catalysed polyethylene resin sold by Sabic known under the trademark Stamylan® LL0863F characterised by a density of 0.963 g/cm³ and a MI₂ of 8 (resin R3).
A commercial Ziegler-Natta catalysed polyethylene resin sold by Atofina known under the trademark Lacqtene®2070MN60 characterised by a density of 0.960 g/cm³ and a MI₂ of 7 (resin R4).
A commercial constrained geometry catalysed polyethylene resin sold by Dow Chemical Company known under the trademark Affinity® PT1451 characterised by a density of 0.902 g/cm³ and a Ml₂ of 8 (resin R5).
A commercial radicalar LDPE resin sold by Atofina known under the trademark Lacqtene® LA0710 characterised by a density of 0.918 g/cm³ and a MI₂ of 7 (resin R6).

Blends have been prepared by mixing:
80% by weight of the resin R1 with 20% by weight of the resin R6 (B1),
70% by weight of the resin R1 with 30% by weight of the resin R6 (B2),
80% by weight of the resin R2 with 20% by weight of the resin R6 (83),
70% by weight of the resin R2 with 30% by weight of the resin R6 (B4),

Comparative blends have been prepared by mixing:
80 % by weight of the resin R3 with 20% by weight of the resin R6 (B5),
70 % by weight of the resin R3 with 30% by weight of the resin R6 (B6),
80 % by weight of the resin R4 with 20% by weight of the resin R6 (B7),
70 % by weight of the resin R4 with 30% by weight of the resin R6 (B8),
80 % by weight of the resin R5 with 20% by weight of the resin R6 (B9),
70 % by weight of the resin R5 with 30% by weight of the resin R6 (B10).

### 3. Preparation of the coating substrates.

The high density polyethylene resin R1 and the comparative high density polyethylene resins R3 and R4 as well as all the blends and the comparative blends described here above were extruded and then coated onto a Kraft paper substrate. The coating equipment consisted of a pilot high speed extrusion coating line equipped with a single barrier screw extruder. The conditions were as follows:
- Screw diameter: 75 mm;
- Die width: 500 mm;
- Die gap : 0.7 mm;
- Melt temperature in the die: about 275°C ;
- Air gap: 145 mm;
- Chill roll temperature: about 13°C

The extrusion coating process of the resins, the blends, the comparative resins and the comparative blends was evaluated on the above-described extrusion coating line. The evaluation was based on the following parameters:
- The highest extrusion coating line speed without causing breaks in the molten web coating the substrate and when the molten web does not break, the highest extrusion coating line speed without causing extrusion instabilities of the molten web,
- The coating weight per surface unit of the substrate at the break of the molten web,
- The percentage of the neck-in of the molten web at a given line speed, as well as at the apparition of the extrusion instabilities of the molten web and at the break of the molten web,
- The output and the extrusion pressure at a given line speed.

The results confirmed that by using a specific mPE resin or a blend of a specific mPE/LDPE in the extrusion coating process, said process is improved.

The extrusion coating process was first conducted by using a specific metallocene catalysed high density polyethylene resin (R1) and the blends thereof made with the resin R6. The results are shown in table III.

Table III shows that when the extrusion coating process was conducted by using the resin R1, the highest extrusion coating line speed without causing extrusion instabilities of the molten web was much higher in comparison with the one measured for a process using the comparative resins R3 and R4.

When the extrusion coating process was conducted by using the blends, the molten web of the blend B1 did not show any extrusion instability even at the highest line speed. Regarding the blends B1 and B2, the weight of the coating per surface unit on the substrate at the break of the molten web was significantly lower than the one measured when the comparative blends B5, B6 and B8 were used.

When the blend B1 was used in the extrusion coating process, the percentage of the neck-in of the molten web at a given line speed was lower in comparison with the one measured for a process using the comparative blends B5 and B7.

It was also observed that when the extrusion coating process was conducted by using the blend B1, the percentage of the neck-in of the molten web when extrusion instabilities of the molten web appeared as well as the percentage of the neck-in of the molten web at break were lower in comparison to those measured when the blend B5 was used. The same results were observed when the blend B2 was used in comparison with the blend B6.

Further, the process of the invention allowed higher outputs of the blends B1 and B2 despite a lower extrusion pressure when compared to a process based on the comparative blends.

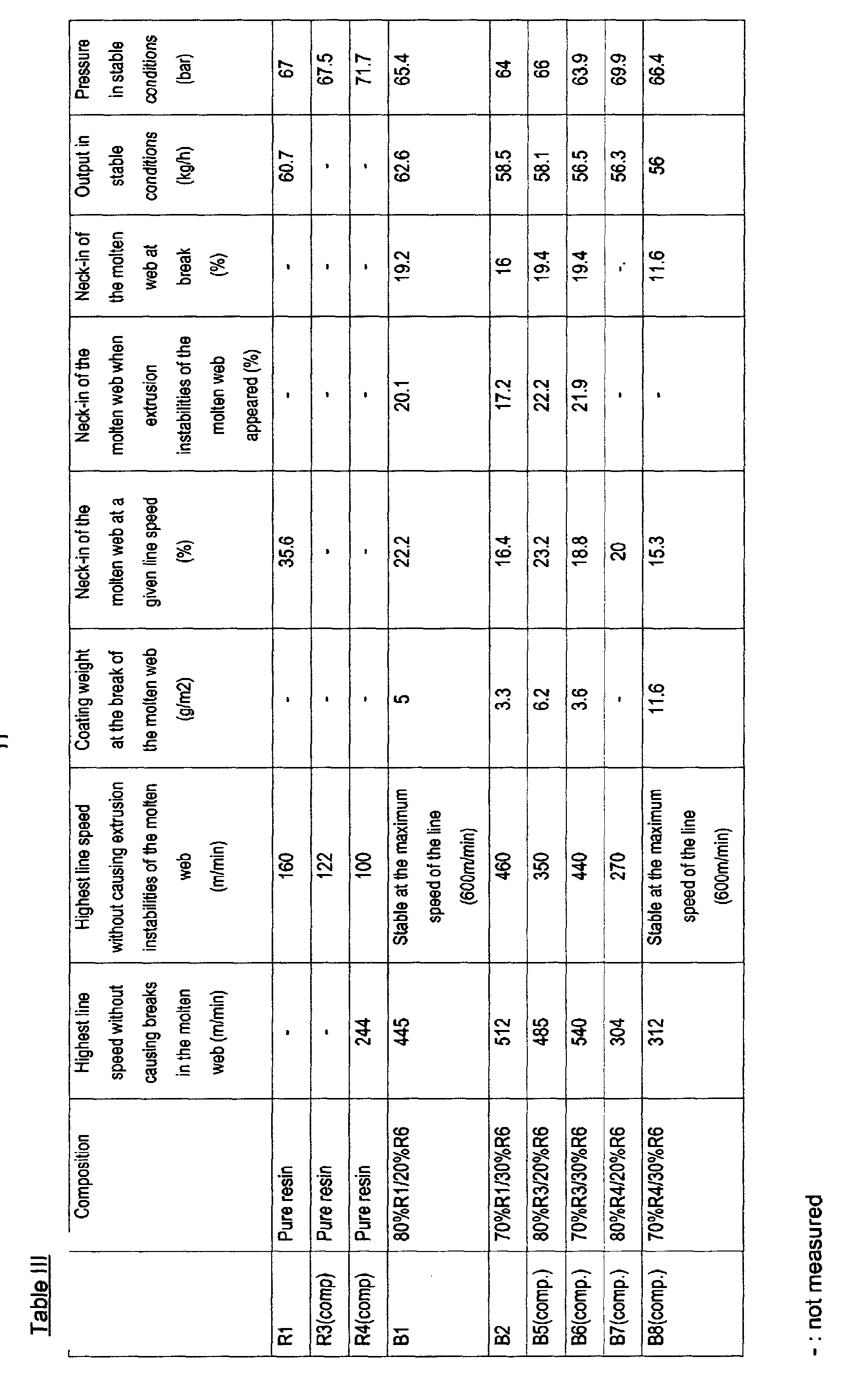

The extrusion coating process was further conducted by using the blends of the specific metallocene catalysed medium density polyethylene resin (R2) with the resin R6 in comparison with the blends made with a constrained geometry catalysed very low density polyethylene resin (R5) and the resin R6. The results are shown in table IV. Whilst the density of the constrained geometry catalysed polyethylene resin used in the comparative blends differs from that of the metallocene catalysed polyethylene resin used in the blends, we believe that this does not interfere significantly on the parameters mentioned in table IV. Table IV shows that when the extrusion coating is conducted according to the process of the invention, the highest line speed without causing breaks in the molten web was increased and the coating weight at the break of the molten web was decreased in comparison to a process using the comparative blends.

**Table IV**

| Blend | Type of blend | Highest line speed without causing breaks in the molten web (m/min) | Coating weight at the break of the molten web (g/m2) | Output in stable conditions (kg/h) | Pressure in stable conditions (bar) |
|---|---|---|---|---|---|
| B3 | 80%R2/20%R6 | > 600 | 2.6 | 58.8 | 54.8 |
| B4 | 70%R2/300%R6 | > 600 | 3.3 | 59.4 | 53.5 |
| B9(comp.) | 80%R5/20%R6 | 497 | 4.5 | 62.4 | 49.7 |
| B10(comp.) | 70%R5/30%R6 | 481 | 4.5 | 62.5 | 49.3 |

## Claims

1. A process for the extrusion coating of a polyethylene resin on a substrate **characterised in that** the polyethylene resin is produced in the presence of an activated metallocene catalyst (mPE), the metallocene catalyst having the general formula:
R (Ind)₂ MQ_{Z-2}
Wherein
Ind is a tetra hydrogenated indenyl group;
R is a substituted or unsubstituted C₁-C₄ alkylidene radical, a dialkyl germanium or a dialkyl silicon or a di-aloxysilane, or an alkyl phosphine or amine radical bridging two tetra hydrogenated indenyl group;
Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other,
Z is the valence of the transition metal and
M is a group IVb, Vb or VIb transition metal,

2. A process according to claim 1 **characterised in that** M is a group IV b transition metal.

3. A process according to claim 2 **characterised in that** M is zirconium.

4. A process according to claims 1 to 3 **characterised in that** R is a substituted or unsubstituted C1-C4 alkylidene radical.

5. A process according to any foregoing claims **characterised in that** the metallocene catalyst is a bridged bis (tetrahydro-indenyl) zirconium dichloride.

6. A process according to claim 5 **characterised in that** the metallocene catalyst is the ethylene bis (tetrahydro-indenyl) zirconium dichloride.

7. A process according to any foregoing claims **characterised in that** the polyethylene resin (mPE) is used in blend with LDPE.

8. A process according to any foregoing claims **characterised in that** the polyethylene resin (mPE) has a density comprised between 0.924g/cm³ and 0.960g/cm³.

9. A process according to any foregoing claims **characterised in that** the coated substrate is selected from the group consisting of paper suitable for photography, cardboard, aluminium foil suitable for liquid packaging, cardboard, paper, aluminium foil suitable for pet food packaging, thermoplastic film suitable for food packaging and cardboard suitable for washing powder packaging.

10. Coating obtainable by the process according to claims 1 to 9.
